# DEMANDE DE BREVET EUROPEEN

(11) **EP 1 198 090 A1**
(43) Date de publication de la demande: **17.04.2002**
(21) Numéro de dépôt: 01402650.4
(22) Date de dépôt: 12.10.2001
(51) Int. Cl.: H04L 1/04, H04L 5/06, H04L 5/02, H04H 1/00

(54) **Système et procédé de radiodiffusion assurant une continuité de service**

(30) Priorité: 13.10.2000 FR 0013157
(71) Demandeur: Thales, 75008 Paris (FR)
(72) Inventeur: Laurent, Pierre-André, Thales, Intellectual Prop., 94117 Arcueil Cédex (FR)
(74) Mandataire: Dudouit, Isabelle

(57) **Abrégé**

Système et procédé permettant d'assurer la continuité de service dans un système de radiodiffusion comportant au moins un modem utilisant la technique COFDM, comprenant l'émission de N cellules temps-fréquence modulées indépendamment les unes des autres.

Le procédé comporte les étapes suivantes :
à l'émission :
   (a) émettre un nombre N₁ de cellules véhiculant des signaux nécessaires à la transmission d'un signal audio numérisé S₁,
   (b) émettre un nombre N₂ de cellules modulées pour transmettre un signal analogique S₂ d'échantillons d'audio analogique,
à la réception :
   (c) lorsque les signaux des cellules N₁ ne sont pas décodables, remplacer le signal audio numérisé S₁ par le signal analogique S₂ véhiculé par les cellules N₂.

## Description

La présente invention concerne un procédé de radiodiffusion permettant d'assurer une continuité de service et un système mettant en oeuvre le procédé.

Jusqu'à présent, les systèmes de radiodiffusion à bande étroite ont utilisé des procédés de modulation purement analogiques, tels que la modulation d'amplitude, de fréquence ou de bande latérale unique, cette dernière étant rarement utilisée.

Dans un avenir proche, vont être normalisés des systèmes de radiodiffusion dits « numériques », destinés à être utilisés dans les bandes situées en dessous de 30 MHz, et ce, en respectant les canaux existants de largeur de bande 9 KHz ou 10 KHz le plus souvent.

Bien que fournissant un son de « haute qualité » (« Cristal Clear » selon les anglo-saxons), ces systèmes sont handicapés par un phénomène inévitable des procédés numériques qui est la disparition totale du signal audio lorsque les conditions de réception sont mauvaises, par exemple le fading plat ou sélectif en fréquence trop sévère, un rapport signal/bruit (S/B) globalement insuffisant, des interférences,....Ceci n'est pas le cas pour les émissions en modulation d'amplitude, par exemple, pour lesquelles, même à très faible rapport signal/bruit S/B, l'audio peut rester intelligible quoique très bruitée et/ou distordue, ce à quoi sont habitués les auditeurs fidèles de ce type d'émissions.

Il a été proposé différents procédés évolués pour remédier au moins partiellement à ce problème.

L'un de ces procédés est l'UEP (abréviation anglo-saxonne de Unequal Error Protection) qui consiste à diviser le flux binaire en deux parties de la façon suivante :
- une partie spécialement protégée, qui peut être reçue avec un rapport S/B plus faible que le reste, et qui véhicule un train binaire suffisant pour régénérer une audio de moindre qualité, mais jugée suffisante pour assurer un minimum de continuité de service,
- une partie non protégée qui, lorsqu'elle est convenablement reçue, procure la qualité du signal audio fréquence évoquée précédemment.

Néanmoins, un tel procédé présente toujours l'inconvénient précité, car lorsque le rapport signal/bruit, S /B, est trop faible, l'audio est purement et simplement coupée.

L'objet de la présente invention concerne un procédé et un système de radiodiffusion adapté à garantir la continuité totale ou quasi-totale de la réception quelles que soient les conditions.

Un tel système est baptisé Liaison Audio Permanente ou Permanent Audio Link (PAL) en anglais.

L'invention concerne un procédé permettant d'assurer une continuité de service dans un système de radiodiffusion comportant au moins un modem utilisant la technique COFDM, comprenant l'émission de N cellules temps-fréquence modulées indépendamment les unes des autres. Il est caractérisé en ce qu'il comporte au moins les étapes suivantes :
à l'émission :
   a) émettre un nombre N₁ de cellules véhiculant des signaux nécessaires à la transmission d'un signal audio numérisé S₁,
   b) émettre un nombre N₂ de cellules modulées pour transmettre un signal analogique S₂ d'échantillons d'audio analogique,
à la réception :
   c) lorsque les signaux des cellules N₁ ne sont pas décodables, remplacer le signal audio numérisé S₁ par le signal analogique S₂ véhiculé par les cellules N₂.

Il comporte par exemple au niveau de l'émission une ou plusieurs étapes de prétraitement telles que le filtrage passe bas, et/ou l'échantillonnage et/ou l'introduction d'un retard pour le signal S₂ composé d'échantillons analogiques afin que les retards des signaux S₁ et S₂ soient sensiblement identiques en sortie du récepteur.

Selon un mode de réalisation le procédé comporte par exemple au niveau de la réception une étape pour séparer au moins le signal S₁ du signal S₂ et une étape de validation du signal S₁ en décodable ou non décodable effectuée avant l'étape c) et au moins une étape de post-traitement du signal S₂ telle que la réjection de bruit de fond.

La proportion de cellules N₁ pour une bande passante de l'ordre de 10 KHz peut être comprise entre 50 et 80% de la quantité N de cellules disponibles.

L'invention concerne aussi un système de radiodiffusion comportant au moins un modem utilisant la technique COFDM, ledit modem étant représenté dans un espace temps-fréquence par plusieurs cellules élémentaires comportant N cellules disponibles, au moins un émetteur et au moins un récepteur. Il est caractérisé en ce qu'il comporte au moins les éléments suivants :
au niveau de l'émetteur :
   - un dispositif adapté à distribuer les signaux nécessaires à la transmission d'un signal audio numérisé S₁ dans un nombre N₁ de cellules et des signaux d'audio analogique S₂ dans un nombre N₂ de cellules avant leur émission,
au niveau du récepteur :
   - un dispositif pour différencier dans le signal Sr reçu au moins le signal audio numérisé S₁ du signal S₂,
   - un dispositif adapté à « qualifier » le signal S₁ en décodable ou non décodable,
   - un dispositif pour remplacer le signal S₁ qui n'est pas audible par le signal analogique S₂.

L'objet de la présente invention présente notamment les avantages suivants :
- il offre une continuité de service pour toutes les conditions de réception, contrairement à un procédé purement numérique,
- il n'y a pas de changement dans le spectre en fréquence du signal émis, d'où une absence de gêne additionnelle en particulier sur les canaux voisins,
- il offre une simplicité de mise en oeuvre et non mise en oeuvre lorsque les conditions sont bonnes,
- la possibilité d'adjoindre des procédés annexes destinés à améliorer la qualité du signal analogique à la réception, ceci ne représentant en effet aucune difficulté puisque le système comporte déjà une majorité de traitements numériques élaborés,
- la qualité de l'audio à la réception, qui contrairement à de l'AM classique (abréviation anglo-saxonne de Amplitude Modulation) reste constante, pour un rapport signal/bruit donné conduisant notamment à :
   - une absence de « coloration » due au fading sélectif par compensation du gain de canal,
   - une absence de distorsion due à la disparition de la porteuse car il n'y a pas de porteuse,
   - une décorrélation des perturbations dues au bruit grâce à l'entrelacement qui rend leur effet similaire à du bruit impulsif donc à spectre plat.

D'autres caractéristiques et avantages apparaîtront à la lecture de la description détaillée d'un mode de réalisation pris à titre d'exemple non limitatif et illustré par les dessins annexés où :
- la figure 1 représente un schéma d'un modem dans un espace temps-fréquence,
- la figure 2 montre le spectre en fréquence d'un signal reçu dans un canal,
- la figure 3 correspond à une représentation dans un plan complexe d'une modulation QAM,
- la figure 4 représente un synoptique des moyens mis en oeuvre à l'émission, et
- la figure 5 représente un synoptique simplifié du récepteur selon l'invention.

De façon à mieux faire comprendre l'invention, la description, donnée à titre illustratif et nullement limitatif, concerne un système destiné à être utilisé avec un modem (abréviation de modulateur-démodulateur) de type COFDM (abréviation anglo-saxonne de Coherent Orthogonal Frequency Division Multiplex). Ce modem peut être décrit comme une juxtaposition dans toute la bande d'émission d'une multitude, par exemple plusieurs centaines, de modems élémentaires à bande étroite.

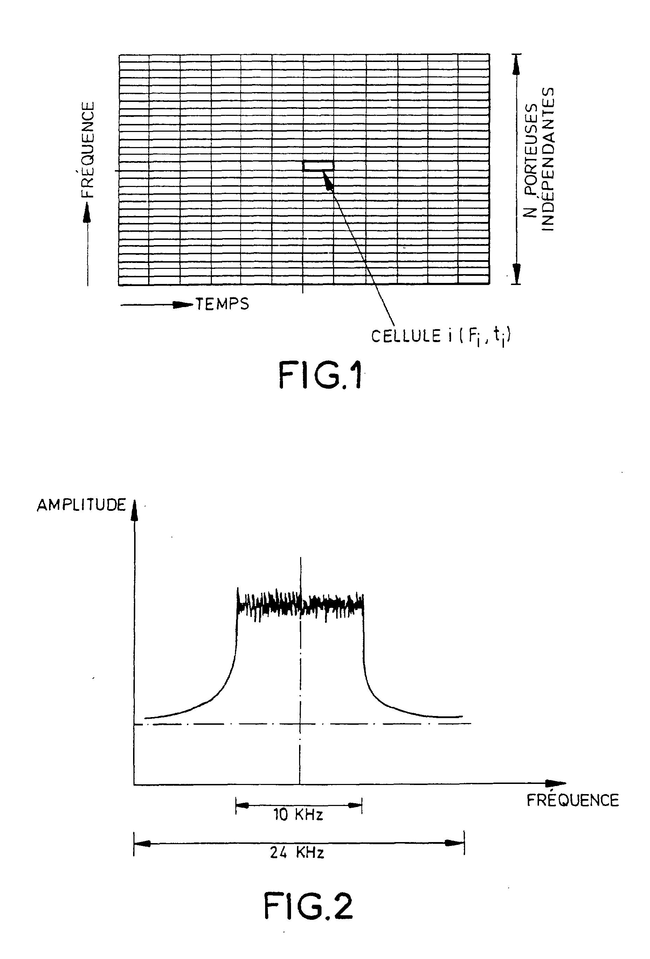

La figure 1 représente une manière de décrire un tel modem. Elle consiste à considérer un espace bi-dimensionnel temps (axe des abcisses)-fréquence (axe des ordonnées) divisé en cellules élémentaires indépendantes, chacune d'entre elles étant caractérisée par une fréquence Fi donnée et un instant ti donné, i étant l'indice de la cellule.

Une cellule d'indice i est associée à un nombre complexe qui correspond directement à l'amplitude A(t) et à la phase ϕ(t) qui lui sont assignées par le modulateur. Le signal modulé S(t) est égal à A(t) cos (ωt + ϕ(t)).

Les cellules élémentaires peuvent avoir des fonctions ou des rôles différents, par exemple :
1) certaines ont un contenu fixe connu du récepteur. Elles servent aux diverses synchronisations nécessaires, telles que la synchronisation temporelle, la synchronisation fréquentielle, ainsi qu'à l'évaluation continue des caractéristiques du canal, qui peuvent varier avec le temps, par exemple le gain complexe en fonction de la fréquence (fonction essentiellement des caractéristiques du canal de transmission), le rapport signal/bruit sur chaque fréquence, ce dernier pouvant varier en fonction du niveau du signal reçu mais aussi à cause des interférences, etc....
2) d'autres cellules ont un rôle « utilitaire » (servitudes). Elles contiennent toutes les informations qui permettent au récepteur de déterminer les caractéristiques du signal qu'il est en train de recevoir, le type de codeur audio utilisé, la station d'émission, la liste des fréquences sur lesquelles il peut recevoir la même station en cas de dégradation de la réception,..etc..
3) toutes les autres cellules, la grande majorité en général, sont disponibles et utilisées pour transmettre des informations binaires libres, qui pour la plupart dans ce genre d'application, correspondent à un signal audio fréquence numérisé. Ce sont ces cellules disponibles ou cellules libres qui vont être utilisées pour mettre en oeuvre le procédé selon l'invention.

L'ensemble de tous ces signaux est aussi uniformément que possible réparti dans la bande de fréquences allouée ou canal, si bien que le spectre en fréquence du signal reçu est généralement quasi plat dans la bande comme le montre la figure 2 dans un diagramme amplitude-fréquence.

Les cellules « libres» sont d'ordinaire modulées par un signal QAM (abréviation anglo-saxonne de Quadrature Amplitude Modulation, modulation combinée sur deux voies en quadrature) pour lequel on définit un nombre fini et fixe de valeurs complexes connues à utiliser en fonction du train binaire à transmettre.

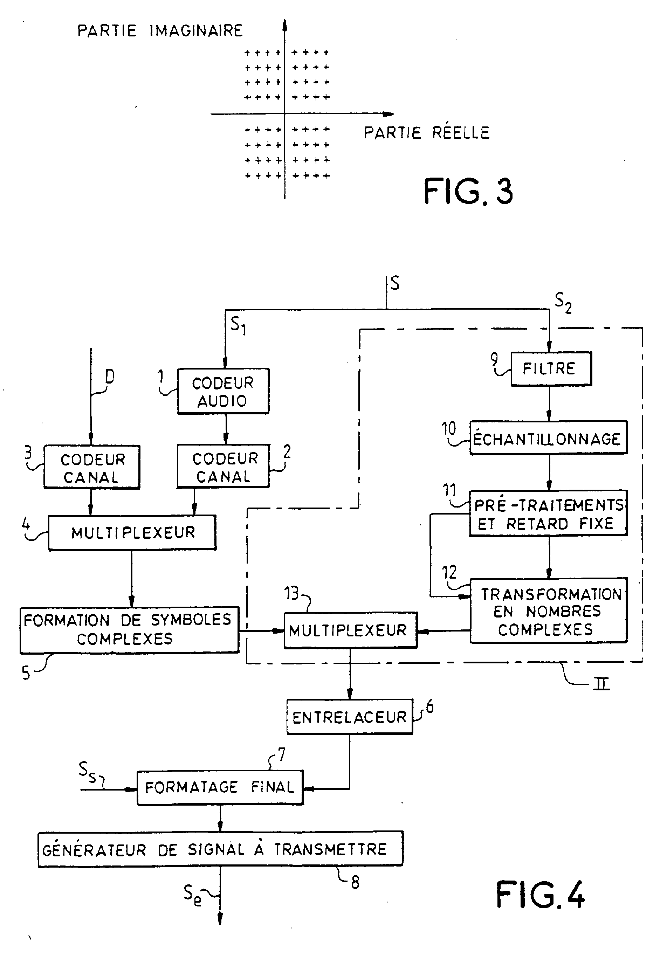

La figure 3 représente le cas d'une modulation QAM 64 pour laquelle 64 points différents sont utilisables dans le plan complexe. L'ensemble de ces points répartis dans un diagramme où l'axe des abscisses correspond à la partie réelle et l'axe des ordonnées à la partie imaginaire est appelé constellation. Cela correspond à la transmission de 6 bits d'information par cellule, la valeur 64 étant égale à 2⁶ cas possibles.

Il faut noter que, si les 6 bits dans l'exemple donné étaient tous libres, cela correspondrait, aux signaux utiles près, à une efficacité spectrale de 6 bits par seconde par Hz de largeur de bande, soit 60 Kbits/s dans un canal de 10 KHz.

Dans la pratique, il est nécessaire d'utiliser une forme ou l'autre de « codage de canal » connue de l'Homme du métier qui consiste à ajouter aux bits d'information libres formant le débit utile, des bits dits de redondance permettant de corriger les erreurs de transmission.

En tenant compte des signaux de servitude, l'efficacité spectrale est alors de l'ordre de 3 bits/s par Hz, ce qui représente 30 Kbits/s utiles dans un canal de 10 KHz, à comparer aux 1 bit/s par Hz de certains systèmes tel que le DAB (abréviation anglo-saxonne de digital audio broadcast) qui ne fournirait que 10 Kbits/s dans un canal de 10 KHz.

De plus, lorsque le canal de transmission est instable, cas fréquent en ondes courtes ou la nuit en ondes moyennes, on utilise toujours des procédés d'entrelacement qui consistent à transmettre les cellules non pas dans leur ordre naturel d'apparition, par exemple dans l'ordre croissant des instants d'émission et, à un instant donné, dans l'ordre croissant des fréquences, mais plutôt à les disperser dans l'espace temps-fréquence (figure 1) de telle sorte que deux cellules initialement consécutives (indice i et (i+1)) soient transmises avec une séparation temporelle et fréquentielle aussi grandes que possible afin que les perturbations qu'elles subissent soient aussi décorrélées que possible.

Les procédés d'entrelacement sont d'une grande efficacité. Ils sont universellement utilisés dans toutes les transmissions/diffusions où le canal n'est pas stationnaire, c'est-à-dire qu'il ne présente pas un gain ou un bruit constant quelle que soit la fréquence ou l'instant considéré.

Le système et le procédé objets de la présente invention sont basés sur des principes donnés ci-après qui sont mis en oeuvre notamment lorsque les prévisions de propagation indiquent que la réception du signal audio a de fortes chances d'être perturbée :
- utiliser une fraction importante N₁ des N cellules libres ou disponibles pour transmettre une audio de « qualité numérique suffisante »,
- utiliser les cellules restantes N₂ pour transmettre une version « analogique » du signal audio,
- à la réception, si l'on ne peut pas décoder correctement l'audio numérique, la remplacer par l'audio analogique afin d'assurer la continuité du service.

Les nombres N₁ et N₂ sont par exemple choisis en fonction de la qualité souhaitée du signal S₂ analogique de la voie de secours. La valeur de N₂ dépend par exemple de la largeur de bande. Pour une largeur de bande de l'ordre de 10 KHz, N₁ varie par exemple entre 50 à 75 % de la valeur de N. Pour une largeur de bande supérieure cette fraction peut être plus faible, le critère à respecter étant toujours la qualité suffisante du signal analogique reçu remplaçant éventuellement l'audio-numérique non décodable.

### EMETTEUR

La figure 4 donne un synoptique complet des éléments à mettre en oeuvre à l'émission ainsi que les étapes de traitement du signal correspondantes. Les moyens comprennent une partie I utilisée normalement pour la transmission numérique et une partie II ajoutée correspondant à l'invention mentionnée par les pointillés sur la figure. Sur la figure la lettre D désigne les données annexes à transmettre au signal audio et la lettre S le signal audio séparé par exemple en deux parties S₁ et S₂, avec S₂ correspondant au signal analogique utilisé pour remplacer le signal audio numérique non audible.

### Partie standard I

La partie standard contient, dans sa version la plus simple par exemple :
- un premier codeur audio 1 qui, à partir du signal audio S₁ à transmettre utilise un procédé de codage audio standard pour générer un train binaire dit « audio numérique »,
- un premier codeur de canal 2 relié au premier codeur audio 1 qui se charge d'ajouter au train binaire, dit « audio numérique », des bits de redondance destinés à augmenter la résistance aux erreurs de transmission,
- un deuxième codeur de canal 3 qui ajoute de la redondance aux trains binaires annexes D qui sont ajoutés au signal audio ; ces trains binaires correspondent par exemple à des données de servitude et/ou à d'autres données à transmettre intrinsèquement numériques telles que des fichiers, des images,...
- un multiplexeur 4 qui se charge de former un train binaire composite en mêlant l'audio (signal audio) issu du codeur de canal 2 et les données issues du codeur de canal 3,
- un système 5 de formation de signaux complexes qui, à partir du train binaire composite forme les « symboles » à transmettre ; les paires, partie réelle-partie imaginaire, correspondent aux points des constellations (figure 3) à transmettre,
- un entrelaceur 6 ayant pour rôle de disperser des points complexes dans l'espace temps-fréquence afin de limiter l'effet des paquets d'erreurs lors de la réception, l'entrelaceur reçoit les signaux issus du multiplexeur 13 décrit ci-après,
- un système de formatage final 7 qui complète les signaux complexes positionnés par l'entrelaceur avec des signaux de référence Ss permettant au récepteur de synchroniser rapidement et efficacement, ainsi que de suivre l'évolution du gain complexe du canal de transmission,
- un dispositif 8 de génération du signal à transmettre qui, à partir de l'ensemble des signaux complexes, qui étaient jusque là dans le domaine fréquentiel, génère le signal temporel, par exemple en réalisant une transformée de Fourier discrète inverse, ajoute des signaux de garde et effectue des post-traitements divers, par exemple l'écrêtage, filtrage,....
- Le signal temporel Se issu du dispositif de génération 8 est transmis vers l'émetteur.

### Partie II comportant les éléments ou moyens permettant la mise en oeuvre de l'invention

cette partie reçoit notamment la fraction S₁ du signal audio désigné sous l'expression « signal audio de secours » prélevée pour être utilisée comme signal analogique S₂ remplaçant le signal audio numérique S₁ non décodable au niveau du récepteur :
- un filtre passe-bas 9 destiné à limiter la bande passante du signal audio de secours S₂ à transmettre qui n'a pas besoin d'être d'aussi bonne qualité que le signal audio normal,
- un système d'échantillonnage 10 du signal audio S₂ filtré et issu de 9 ; celui-ci doit être échantillonné à une fréquence garantissant une bande passante suffisante pour éviter de perdre en intelligibilité, ce qui fixe un nombre minimum de cellules du modem à affecter à cette fonction. Une fréquence réduite, par exemple comprise entre 4 KHz et 8 KHz peut être suffisante,
- un dispositif adapté 11 à effectuer différents pré-traitements simples tels que :
   - la pré-accentuation ou encore des traitements plus complexes par exemple la distorsion non linéaire ou LinCompEx, procédé où le signal subit une compression dynamique et est transmis accompagné d'un train binaire robuste (données annexes) décrivant l'état de compression,
   - l'introduction d'un retard fixe au niveau du signal S₂. En effet dans tous les cas, le signal audio numérisé subit un retard fixe correspondant au retard de l'audio numérique, de sorte que du côté du récepteur le signal audio analogique S₂ et le signal audio numérique S₁ soient synchrones afin de ne pas perturber l'audition lors des commutations éventuellement effectuées lors de la réception du signal.
      En l'absence de données annexes, le signal audio contient 2 Na échantillons réels si Na cellules ont été réservées pour lui. Dans le cas où le signal audio comporte B bits de données annexes, il contiendra 2 Na ― B/2 échantillons par exemple.
- Un dispositif 12 adapté à transformer les échantillons audio réels ou binaires par exemple de la manière suivante :
   - deux échantillons audio successifs S(2n) et S(2n+1) forment respectivement la partie réelle et la partie imaginaire du nème échantillon complexe,
   - deux bits successifs, si nécessaire, B(2p) et B(2p+1) forment respectivement la partie réelle et la partie imaginaire du pème échantillon complexe, un bit 0 correspondant à une valeur de -S et un bit 1 à une valeur de +S (S est d'autant plus grand que l'on veut rendre ces informations plus robustes).
   - Un multiplexeur 13 qui se charge d'insérer les valeurs complexes générées par le dispositif 12 parmi celles issues du dispositif 5 de formation de symboles complexes qui, elles, ne peuvent prendre qu'un nombre réduit de valeurs (points choisis dans des constellations). Cette insertion doit impérativement s'effectuer avant l'entrelacement final réalisé dans l'entrelaceur 6, afin que le signal audio bénéficie d'avantages identiques ou similaires, en termes de décorrélation du bruit et de dé-structuration du brouillage que le signal purement numérique. Elle est aussi indispensable afin de conserver au signal un spectre en fréquence plat, identique à celui d'un signal purement numérique ( figure 2). A la sortie de l'entrelaceur les signaux sont transmis au dispositif de formatage final avant d'être transmis vers l'émetteur.

### RECEPTEUR

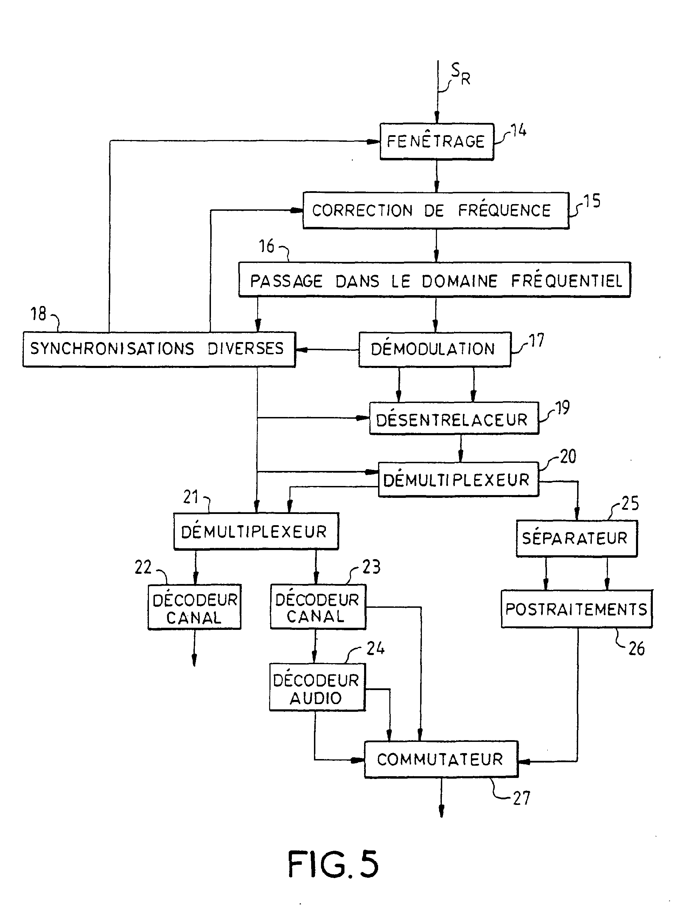

La figure 5 représente un synoptique simplifié d'un mode de réalisation d'un récepteur adapté à mettre en oeuvre le procédé selon l'invention.

Le signal reçu Sr est supposé avoir déjà subi tous les traitements de réception classiques, par exemple, l'étape d'amplification, les filtrages, la régulation de niveau (CAG, abréviation de Contrôle Automatique de Gain), le passage en bande de base et il se présente sous la forme d'échantillons temporels complexes.

Le récepteur comporte notamment les moyens nécessaires pour mettre en oeuvre les différentes étapes des traitements de réception suivantes :
- Le fenêtrage 14
   - un dispositif permet de réaliser le fenêtrage chargé de prélever dans le signal reçu Sr une partie réputée stable, c'est-à-dire une partie où sont simultanément présentes toutes les répliques du signal reçu, chaque réplique ayant son propre retard, sa propre phase et sa propre amplitude. Ceci est caractéristique des canaux de transmission dans des bandes de fréquences utilisées et correspond au phénomène bien connu sous le nom de multi-trajets,
- la correction de fréquence 15
   - elle est destinée à compenser à la fois les dérives en fréquence des émetteurs et des récepteurs, mais aussi le décalage Doppler éventuel dû à une variation de la distance émetteur-récepteur et un décalage en fréquence temporaire moyen de tous les trajets reçus,
- le passage dans le domaine fréquentiel 16
   - il est effectué par une transformée de Fourier discrète par exemple,
- la démodulation cohérente 17 et les synchronisations 18 qui sont mises en oeuvre de concert par exemple afin de :
   - bien estimer le décalage en fréquence résiduel à compenser,
   - positionner correctement la fenêtre de réception,
   - estimer pour chaque échantillon complexe de sortie sa valeur complexe telle qu'elle était à l'émission (valeur complexe normalisée, après estimation et compensation du gain complexe du canal) ainsi que son rapport signal/bruit, lequel dépend à la fois du temps (canal non stationnaire) et de la fréquence (canal sélectif en fréquence, présence de brouillages à bande plus ou moins étroite)
- le désentrelacement 19
   - il remet dans l'ordre original les échantillons complexes accompagnés du rapport signal/bruit estimé,
- un premier démultiplexage, démultiplexeur 20, qui sépare les échantillons purement « numériques » de ceux affectés à la liaison de secours dite « analogique » S₂,
- un deuxième démultiplexage, démultiplexeur 21, qui sépare dans le train d'échantillons purement « numérique », le signal audio S₁ et les données purement numériques D,
- une étape de décodage, décodeur 22, qui utilise la redondance pour éliminer les erreurs résiduelles dans les données purement « numériques »,
- une étape de décodage, décodeur 23, qui utilise la redondance pour éliminer les erreurs résiduelles dans le train binaire représentant le signal audio numérique S₁ ; en plus du train binaire numérique « propre », le décodeur 23 détermine les cas où le décodage a échoué, par exemple lorsque les erreurs sont en quantité trop importante, (il transmet cette information au dispositif de commutation 27 décrit ci-après),
- un décodage audio, décodeur 24 qui reconstitue finalement le signal audio à partir du train binaire associé. Ce décodeur 24 est aussi capable grâce à des systèmes de contrôle de parité par exemple, de détecter des erreurs résiduelles dans le train binaire d'entrée,
- une étape de séparation, dispositif 25 adapté à séparer les données de contrôle de l'audio analogique du signal audio analogique S₂,
- les bits et les échantillons issus de l'étape de séparation sont par exemple soumis à un post traitement à l'aide d'un dispositif adapté 26. Ces posts-traitements exploitent éventuellement les données de contrôle et effectuent les traitements inverses de ceux réalisés au niveau de l'émission décrite précédemment, ainsi que d'autres traitements tels que la réjection du bruit de fond.
   En effet, grâce à l'entrelacement et à la compensation du gain du canal effectuée par le démodulateur 24, le niveau de signal ne varie pas avec le gain du canal, contrairement à une transmission de type AM classique et de plus le bruit additionnel est quasiment plat à court terme, c'est-à-dire qu'il est uniformément réparti dans la bande audio (bruit blanc) et peut facilement être estimé et réduit sinon éliminé par des procédés classiques telle que la soustraction spectrale par exemple,
- une étape de commutation, commutateur 27, qui reçoit le signal audio numérique S₁ issu du décodeur audio 24 et le signal audio analogique de secours S₂, ainsi que des informations sur la possibilité de décoder ou non le signal S₁, et qui, lorsque le signal S₁ ne peut être décodé, par exemple suite à la détection de l'impossibilité de corriger les erreurs trop nombreuses qui l'affectent (information issue du décodeur canal 23 ou à la détection d'erreurs résiduelles (information issue du décodeur audio...), remplace le signal S₁ qui ne peut être décodé par le signal analogique S₂.

## Revendications

1. Procédé permettant d'assurer une continuité de service dans un système de radiodiffusion comportant au moins un modem utilisant la technique COFDM, comprenant l'émission de N cellules temps-fréquence modulées indépendamment les unes des autres **caractérisé en ce qu'**il comporte au moins les étapes suivantes :
à l'émission :
a) émettre un nombre N₁ de cellules véhiculant des signaux nécessaires à la transmission d'un signal audio numérisé S₁,
b) émettre un nombre N₂ de cellules modulées pour transmettre un signal analogique S₂ d'échantillons d'audio analogique,
à la réception :
c) lorsque les signaux des cellules N₁ ne sont pas décodables, remplacer (27) le signal audio numérisé S₁ par le signal analogique S₂ véhiculé par les cellules N₂.

2. Procédé selon la revendication 1 **caractérisé en ce qu'**il comporte au niveau de l'émission une ou plusieurs étapes de prétraitement telles que le filtrage passe bas (9), et/ou l'échantillonnage (10) et/ou l'introduction d'un retard pour le signal S₂ composé d'échantillons analogiques.

3. Procédé selon la revendication 2 **caractérisé en ce qu'**il comporte une étape de compression de dynamique avant l'étape d'introduction du retard pour le signal S₂.

4. Procédé selon la revendication 1 **caractérisé en ce qu'**il comporte au niveau de la réception une étape (20) pour séparer au moins le signal S₁ du signal S₂ et une étape (23) de validation du signal S₁ en décodable ou non décodable effectuée avant l'étape c).

5. Procédé selon la revendication 1 **caractérisé en ce qu'**il comporte à la réception au moins une étape de post-traitement (26) du signal S₂ telle que la réjection de bruit de fond.

6. Procédé selon l'une des revendications 1 à 5 **caractérisé en ce que** la proportion de cellules N₁ pour une bande passante de l'ordre de 10 KHz est comprise entre 50 et 80% de la quantité N de cellules disponibles.

7. Système de radiodiffusion comportant au moins un modem utilisant la technique COFDM, ledit modem étant représenté dans un espace temps-fréquence par plusieurs cellules élémentaires comportant N cellules disponibles, au moins un émetteur et au moins un récepteur **caractérisé en ce qu'**il comporte au moins les éléments suivants :
au niveau de l'émetteur :
• un dispositif adapté à distribuer les signaux nécessaires à la transmission d'un signal audio numérisé S₁ dans un nombre N₁ de cellules et des signaux d'audio analogique S₂ dans un nombre N₂ de cellules avant leur émission,
au niveau du récepteur :
• un dispositif (20) pour différencier dans le signal Sr reçu au moins le signal audio numérisé S₁ du signal S₂,
• un dispositif (23) adapté à « qualifier » le signal S₁ en décodable ou non décodable,
• un dispositif (27) pour remplacer le signal S₁ qui n'est pas audible par le signal analogique S₂.

8. Système selon la revendication 7 **caractérisé en ce qu'**il comporte au moins un des éléments suivants :
• un filtre passe bas (9) au niveau du récepteur pour filtrer le signal S₂,
• un système (10) d'échantillonnage du signal S₂,
• un dispositif (11) destiné à introduire un retard,
• un dispositif permettant de réaliser la compression de dynamique du signal S₂.

9. Système selon la revendication 7 **caractérisé en ce qu'**il comporte au niveau du récepteur un dispositif (26) adapté à effectuer des traitements sur le signal S₂ tels que la réjection du bruit de fond.

10. Système selon l'une des revendications 7 à 9 **caractérisé en ce que** le nombre de cellules N₁ est compris entre 50 et 80 % de la valeur du nombre de cellules libres N dans le modem pour une bande de fréquence de l'ordre de 10 KHz.
